# EUROPÄISCHE PATENTSCHRIFT

(11) **EP 0 756 970 B1**
(45) Veröffentlichungstag und Bekanntmachung des Hinweises auf die Patenterteilung: **20.10.1999**
(21) Anmeldenummer: 96111900.5
(22) Anmeldetag: 24.07.1996
(51) Int. Cl.: B60R 21/00

(54) **Einrichtung zur Übertragung eines Crash-Impulses**
Crash-impulse transmitting device
Dispositif de transmission d'un choc

(30) Priorität: 31.07.1995 DE 19528026
(43) Veröffentlichungstag der Anmeldung: 05.02.1997
(73) Patentinhaber: ADAM OPEL AG, 65423 Rüsselsheim (DE)
(72) Erfinder: Rick, Ulrich, Dipl.-Ing., 55595 Roxheim (DE); Klenk, Jürgen, Dipl.-Ing., 65468 Trebur (DE)
(74) Vertreter: Kümpfel, Heinz, Dipl.-Ing.

(56) Entgegenhaltungen:
- EP-A- 0 445 907
- EP-A- 0 565 501
- DE-A- 4 312 408
- US-A- 4 346 914
- PATENT ABSTRACTS OF JAPAN vol. 018, no. 620 (M-1711), 25.November 1994 & JP-A-06 239195 (TOYOTA MOTOR CORP), 30.August 1994,

## Beschreibung

Die Erfindung betrifft eine Einrichtung zur Übertragung eines Crash-Impulses gemäß dem Oberbegriff des Patentanspruches 1.

Bei heutigen Kraftfahrzeugen ist es allgemein üblich die tragende Struktur der Karosserie zur Übertragung des Crash-Impulses zu dem in einem geschützten Bereich des Fahrzeuges angeordneten Sensor zu nutzen, welcher dann ein elektrisches Signal an ein Steuergerät sendet, welches nach einer Plausibilitätsprüfung die Aktivierung einer Sicherheitseinrichtung auslöst. Beispielsweise wird dann die Zündung eines Airbags oder das Straffen eines Anschnallgurtes veranlaßt. In der Regel werden durch die bekannten Einrichtungen nur Frontalcrashs in einem Winkelbereich von ca. 30° beidseitig zur Fahrzeuglängsachse erfaßt.

In der JP-A-62 39 195 ist die Anordnung eines Kollisions-Sensors zwischen den beiden Vordersitzen, also nahe des Getriebetunnels, gemeinsam mit der Steuereinheit zur Auslösung von Airbags beschrieben. Ein Crash-Impuls wird dabei durch die ohnehin am Fahrzeug vorhandenen Bauteile der Bodenanlage von der Außenstruktur des Fahrzeuges zu dem Sensor übertragen. Da die Bodenanlage in verschiedenen Richtungen unterschiedliche Steifigkeit aufweist, ist die Übertragung eines Crash-Impulses auch richtungsunterschiedlich und somit schwierig auswertbar.

Bei einem Seitenaufprall kann ein Impuls über vorhandene tragende Strukturen nur bedingt weitergeleitet werden.

Eine Vorrichtung zur Erfassung eines Seitenaufpralls ist in der DE-A-43 12 408 beschrieben. Bei der in dieser Schrift gezeigten Vorrichtung sind mehrere Sensoren in einer Tür bzw. im Türbereich des Kraftfahrzeuges angeordnet und mit mehreren an der Tür bzw. im Türbereich befestigten Airbags verbunden. Bevorzugt soll der Sensor an einer Stelle eines Türrahmens angeordnet sein, welcher hinter einem Verstärkungsglied der Tür liegt. Bei einem Crash von der Seite erhält der Sensor durch die Verformung der Tür oder anderer Teile mechanisch eine Information. Diese Vorrichtung verursacht einen hohen Verkabelungsaufwand, da jeder Sensor und jeder Airbag an eine Versorgung mit elektrischem Strom angeschlossen sein muß und da zusätzlich jeder Sensor mit "seinem" Airbag verbunden sein muß. Dafür notwendige Leitungen sind sehr kostenintensiv und schwer zu verlegen. Weiterhin können solche Leitungen und auch der Sensor selbst bei dem Crash zerstört werden, was dann zu einem Ausfall der Sicherheitseinrichtungen führt.

In der gattungsbildenden US-A-43 46 914 ist die Anordnung einer Steuereinheit zur Auslösung von Passagier-Rückhaltesystemen im Zentrum des Fahrzeuges nahe des Getriebetunnels dargestellt. Die Übertragung eines Crash-Impulses von der Fahrzeug-Perifferie zu der Steuereinheit erfolgt von piezoelektrischen Sensoren, die an ausgewählten Schweißstellen des Fahrzeugverbundes angeordnet sind und mit der Steuereinheit elektrisch verbunden sind. Mit einer solchen Anordnung kann ein Crash-Impuls zwar relativ sicher erfaßt werden. Der Aufwand für die Auslegung eines solchen Systems und dessen praktische Umsetzung ist jedoch sehr hoch. Darüber hinaus ist ein solches System über die Lebensdauer eines Fahrzeuges hinweg erheblichen Störeinflüssen ausgesetzt.

Der Erfindung liegt das Problem zugrunde, eine Vorrichtung der gattungsgemäßen Art so zu gestalten, daß sie sicher Crashs aus unterschiedlichen Richtungen erfaßt, einfach zu montieren ist, bei dem der Sensor gegenüber einem ersten Impuls bei einem Crash vor Zerstörung geschützt ist und die über die Fahrzeuglebensdauer störungssicher arbeitet.

Dieses Problem wird erfindungsgemäß durch die Merkmale des Patentanspruches 1 gelöst. Vorteilhafte Weiterbildungen sind Gegenstand der Unteransprüche.

Der Sensor ist, so wie bekannt, an einem von einer zu überwachenden Außenstruktur des Kraftfahrzeuges entfernten Ort befestigt. Zwischen der Außenstruktur und dem Sensor ist ein mit dem Fahrzeugaufbau fest verbundenes Crash-Impuls-Übertragungsteil angeordnet ist, welches von der Seitenstruktur zum Ort der Sensoranordnung Impulsübertragungspfade bildet, die den Crash-Impuls transportieren.

Dieses Crash-Impuls-Übertragungsteil ermöglicht den Einsatz eines zentralen Sensors, was eine Verlegung der Leitungen auf ein Minimum reduziert. Das Crash-Impuls-Übertragungsteil ist derart geformt, daß es den Crash aus unterschiedlichen Richtungen auf den Sensor überträgt. Die Montage der Einrichtung gestaltet sich einfacher als bisher, da der Sensor an einem leicht zugänglichen und zugleich geschützten Ort im Kraftfahrzeug angeordnet werden kann, ohne daß zusätzliche Leitungen erforderlich werden. Durch diese Maßnahmen entsteht somit eine große Kostenersparnis im Vergleich zu den bekannten Vorrichtungen. Weiterhin trägt diese Vorrichtung zu einer Erhöhung der Sicherheit des Ansprechens des Sensors bei, was zu einer Verbesserung der passiven Sicherheit der Insassen des Kraftfahrzeuges führt.

Besonders vorteilhaft kann so der auf einen Seitencrash ansprechende Sensor auch auf einem Mitteltunnel des Kraftfahrzeuges angeordnet sein. So ergibt sich ein besonders großer Sicherheitsvorteil gegenüber anderen Lösungen, da der Mitteltunnel bei einem Crash meistens unbeschädigt bleibt und damit eine Beschädigung des Sensors oder der Leitungen besonders unwahrscheinlich ist.

Der Sensor kann damit, so wie an sich bekannt, auch mit einem eine Sicherheitseinrichtung auslösenden Steuergerät integriert sein. Der Aufwand an Leitungen kann somit weiterhin verringert werden, wodurch auch eventuelle Störquellen entfallen.

Das Crash-Impuls-Übertragungsteil besteht aus einem Steggitter, dessen Gitterstäbe im wesentlichen in Richtung des zu leitenden Crash-Impulses verlaufen und das mit der Bodengruppe des Fahrzeugaufbaues integriert ist.

Das Crash-Impuls-Übertragungsteil ist im einfachsten Fall ein in Richtung der Impulswege versteiftes Blechteil. Das Crash-Impuls-Übertragungsteil kann aber auch als Leichtmetallspritzgußteil ausgeführt sein, welches fest mit der Bodengruppe verbunden ist. Ebenso kann das Crash-Impuls-Übertragungsteil aus einem Kunststoffkörper in Steg- oder Wabenstruktur ausgebildet sein, der in Richtung der Impulswege unnachgiebig ist.

Mit einem solchen Crash-Impuls-Übertragungsteil kann ein Crash-Impuls auch von der Seite eines Kraftfahrzeuges gezielt auf einen in Fahrzeugmitte geschützt angeordneten Sensor übertragen werden.

Ein Ausführungsbeispiel der Erfindung ist nachstehend anhand von Zeichnungen beschrieben. Es zeigen:
- Fig. 1:: einen Schnitt durch ein Kraftfahrzeug mit einem von der erfindungsgemäßen Vorrichtung gesteuerten Airbag;
- Fig. 2:: eine Darstellung eines Ausschnitts eines Crash-Impuls-Übertragungsteils.

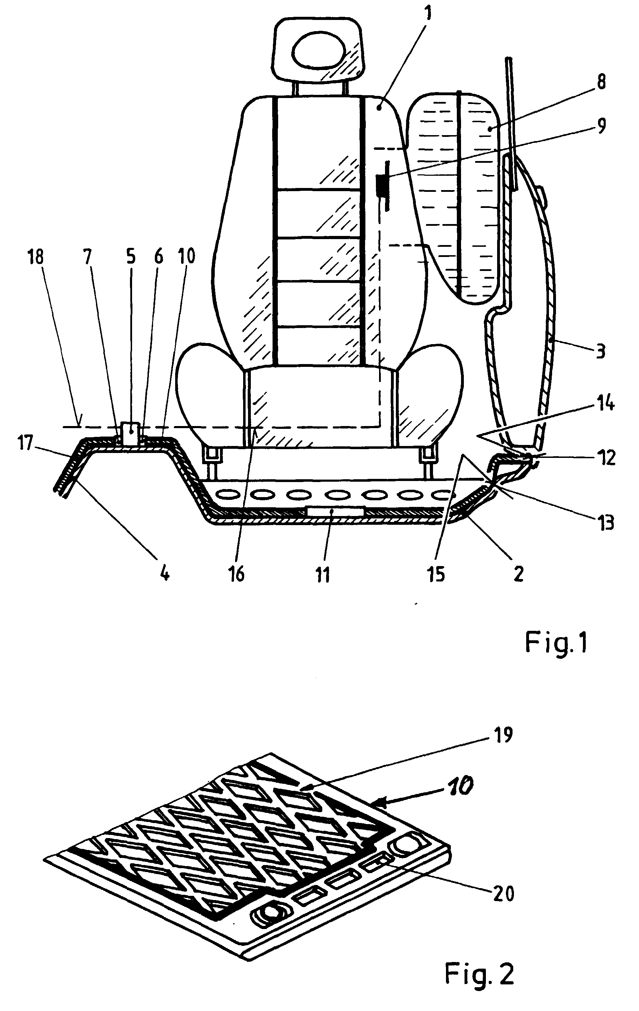

Die Figur 1 zeigt ein im Bereich eines Fahrersitzes 1 aufgeschnittenes Kraftfahrzeug mit einer Außenstruktur aus einem Bodenblech 2 und einer Tür 3. Das Bodenblech 2 hat zur Bildung eines Mitteltunnels 4 eine nach oben gezogene Ausformung. Auf dem Mitteltunnel 4 befindet sich ein Steuergerät 5 mit integrierten Sensoren 6, 7. An dem Fahrersitz 1 ist ein Airbag 8 mit einer Auslösevorrichtung 9 befestigt. Der Airbag 8 ist hier zur Verdeutlichung in einem aufgeblasenen Zustand eingezeichnet. Unter dem Fahrersitz 1 befindet sich ein Crash-Impuls-Übertragungsteil 10. Dieses Crash-Impuls-Übertragungsteil 10 ist mit geeigneten Mitteln 11 über die Fläche des Bodenbleches 2 mit der Fahrzeugstruktur verbunden. Es bildet damit Impulswege zwischen den an dem Steuergerät 5 befindlichen Sensoren 6, 7 und der Tür 3. Das Bodenblech 2 und die Tür 3 besitzen dazu Flächen 12, 13, die gegen entsprechende Flächen 14, 15 des Crash-Impuls-Übertragungsteils 10 anliegen. Durch diese Gestaltung wird ein Crash sicher an die Sensoren 6, 7 weitergeleitet. Das Steuergerät 5 generiert dann ein Auslösesignal, das über eine Leitung 16 an die Auslösevorrichtung 9 des Airbags 8 übermittelt wird.

Es ist möglich, an beiden Seiten des Fahrzeuges voneinander getrennte Crash-Impuls-Übertragungsteile vorzusehen. Dazu zeigt die Zeichnung ein Teil eines weiteren Crash-Impuls-Übertragungsteils 17. Von dem Steuergerät 5 führt eine weitere Leitung 18 zu einem nicht dargestellten Airbag auf dieser Seite. Die von dem Steuergerät 5 zu den Auslösevorrichtungen 9 führenden Leitungen 16, 18 sind zur gleichzeitigen Übermittlung der Auslösesignale sowie der Versorgung der Auslösevorrichtung mit elektrischem Strom ausgebildet.

In Figur 2 ist ein Ausschnitt des Crash-Impuls-Übertragungsteils 10 dargestellt. Deutlich ist hier zu erkennen, daß es als Steggitter 19 ausgebildet ist. Dieser Aufbau ist in Richtung seiner Fläche sehr steif und trotzdem leicht.

Die Befestigung des Crash-Impuls-Übertragungsteils 10, 17 mit der tragenden Bodengruppe des Kraftfahrzeuges kann durch Schweißverbinden, durch Schrauben oder Nieten erfolgen.

## Patentansprüche

1. Einrichtung zur Übertragung eines Crash-Impulses bei einem Kraftfahrzeug von der Stelle einer Crash-Einleitung an der vom Rand eines Bodenbleches (2) bzw. den unteren Kanten von Türen (3) gebildeten Außenstruktur zu einem im Kraftfahrzeug nahe oder auf einem Mitteltunnel (4) angeordneten Sensor (6, 7), **dadurch gekennzeichnet**, daß zwischen der Außenstruktur und dem Ort der Sensoranordnung ein mit dem Bodenblech (2) fest verbundenes aus einem Steggitter bestehendes Crash-Impuls-Übertragungsteil (10, 17) angeordnet ist, dessen Gitterstäbe im wesentlichen in Richtung des zu leitenden Crash-Impulses ausgerichtet sind.

2. Einrichtung nach Anspruch 1, **dadurch gekennzeichnet**, daß das Crash-Impuls-Übertragungsteil (10, 17) in Leichtmetallspritzguß ausgeführt ist.

3. Einrichtung nach Anspruch 1 und 2, **dadurch gekennzeichnet**, daß das Crash-Impuls-Übertragungsteil (10, 17) als Kunststoffteil ausgeführt ist.

4. Einrichtung nach Anspruch 1 und 2, **dadurch gekennzeichnet**, daß das Crash-Impuls-Übertragungsteil (10, 17) als Blechformteil ausgeführt ist.

## Claims

1. Installation for the transmission of a crash impulse in a motor vehicle from the location of crash initiation on the external structure formed by the edge of a floor panel (2) or the lower edges of doors (3), to a sensor (6, 7) arranged in the motor vehicle near or on a centre tunnel (4), characterised in that between the external structure and the location of the sensor assembly is arranged a crash impulse transmitting portion (10, 17) which is rigidly connected to the floor panel (2) and consists of a web lattice and whose lattice bars are essentially oriented in the direction of the crash impulse to be transmitted.

2. Installation according to claim 1, characterised in that the crash impulse transmitting portion (10, 17) is made by light metal diecasting.

3. Installation according to claims 1 and 2, characterised in that the crash impulse transmitting portion (10, 17) is constructed as a plastic part.

4. Installation according to claims 1 and 2, characterised in that the crash impulse transmitting portion (10, 17) is constructed as a shaped sheet metal part.

## Revendications

1. Dispositif de transmission d'une impulsion de choc dans un véhicule, du point d'introduction du choc au niveau de la structure extérieure formée par le bord d'une tôle de plancher (2) ou les bords inférieurs de portes (3) jusqu'à un capteur (6, 7) disposé sur le véhicule, dans le voisinage ou sur un tunnel (4) médian, caractérisé par le fait qu'entre la structure extérieure et le point de montage du système de capteur est disposé un élément de transmission d'impulsion de choc (10, 17) formé d'un réseau de barres lié fermement à la tôle de plancher (2), dont les barres sont orientées essentiellement dans la direction de l'impulsion de choc à transmettre.

2. Dispositif selon la revendication 1, caractérisé par le fait que l'élément de transmission d'impulsion de choc (10, 17) est réalisé sous la forme d'une pièce en alliage léger, moulée par injection.

3. Dispositif selon la revendication 1, caractérisé par le fait que l'élément de transmission d'impulsion de choc (10, 17) est réalisé sous la forme d'une pièce en matière plastique.

4. Dispositif selon la revendication 1, caractérisé par le fait que l'élément de transmission d'impulsion de choc (10, 17) est réalisé sous la forme d'une pièce façonnée en tôle.
